# EUROPÄISCHE PATENTSCHRIFT

(11) **EP 1 640 156 B1**
(45) Veröffentlichungstag und Bekanntmachung des Hinweises auf die Patenterteilung: **03.03.2010**
(21) Anmeldenummer: 05020299.3
(22) Anmeldetag: 16.09.2005
(51) Int. Cl.: B32B 27/34, B42D 15/10

(54) **Polycarbonat-Mehrschichtfolie**
Polycarbonate-multilayer
Multicouche en polycarbonate

(30) Priorität: 23.09.2004 DE 102004046522
(43) Veröffentlichungstag der Anmeldung: 29.03.2006
(73) Patentinhaber: Wipak Walsrode GmbH & Co. KG, 29699 Bornlitz (DE)
(72) Erfinder: Koppers, Markus, Dr., 29683 Bad Fallingbostel (DE); Kuckertz, Christian, Dr., 57462 Olpe (DE); Jacobsen, Sven, Dr., 29683 Bad Fallingbostel (DE); Kühn, Klaus-Dieter, 29683 Bad Fallingbostel (DE)
(74) Vertreter: Lins, Martina

(56) Entgegenhaltungen:
- EP-A- 0 423 504
- EP-A- 0 430 282
- EP-A- 1 380 442

## Beschreibung

Die Erfindung betrifft eine Polycarbonat-Mehrschichtfolie und deren Verwendung für knickbruchfeste Polycarbonat-Karten, insbesondere mit Einnählasche.

Übliche Materialien für Sicherheitskarten und auch Chipkarten sind Polyvinylchlorid (PVC), Polyester (PE), Polymethylmethacrylat (PMMA) und Polycarbonat (PC). Polyvinylchlorid und Polyester sind preiswerte Materialien, die jedoch nicht hochtransparent zu erhalten sind. Die Herstellung von Kartenverbunden mittels Coextrusion von Polyester wird in der EP 1 062 104 B1 beschrieben.

Für hochwertige Anwendungen wird PC bevorzugt, da es hochtransparent ist, eine hohe Biegebruchbeständigkeit besitzt und lokal vor Ort mittels Laser beschreibbar ist. Weitere positive Eigenschaften von Polycarbonat sind sein weiter Temperatureinsatzbereich von - 150 °C bis + 150 °C, hohe Festigkeit, Steifigkeit und Härte. Polycarbonatausweise sind in der ganzen Welt gängig.

Nachteilig ist, dass die Knickbruchbeständigkeit von Polycarbonat zu gering ist, um PC-Karten dauerhaft in eine Reisepasshülle einnähen zu können.

Bei den heute erhältlichen PC-Karten handelt es sich typischerweise um Ein- oder Mehrlagenverbunde, die z.B. folgendermaßen aufgebaut sein können:
PC (laserbeschreibbar)
Druckfarbe
PC weiß
PC mit integriertem Chip
PC weiß
PC transparent

Zur Herstellung des Verbundes werden die unterschiedlichen PC-Schichten zwischen polierten Metallplatten bei 190°C für 25 - 40 Minuten bei einem Druck von 20 bis 40 N/cm² verpresst.

Da sich ungleichartige Polymermaterialien mit dem oben beschriebenen Verfahren nicht zu einem hinlänglich festen Verbund verpressen lasse, besteht ein großer Bedarf an Polycarbonat-Folien mit unterschiedlichen Eigenschaften, die für die Herstellung von Polycarbonat-Karten verwendet werden können. So werden beispielsweise Folien mit strukturtragenden Schichten benötigt, die Ausnehmungen für Chips, Transponder, elektrische Zuleitungen, Spulen und dergleichen enthalten. Mehrschichtige Kartenkörper, die Schaltkreise umfassen, sind beispielsweise in der DE 44 36 302 C1, der DE 101 22 416 A1 oder der DE 101 50 194 beschrieben.

Speziell für die Herstellung von Dokumentenbüchern, die neben Kunststoffkarten weitere Dokumente oder Seiten in Papierform umfassen, ist es erforderlich, dass die Karten und Dokumente sich am Rand verbinden, z.B. vernähen lassen und dass diese Verbindungen bei häufigem Blättern nicht brechen.

Aus der EP 1 380 442 ist ein Verfahren zur Herstellung einer Informationsseite innerhalb eines Dokumentenbuchs bekannt, bei dem eine u. a. Polycarbonatschichten enthaltende Kunststoffkarte mit einer Schicht aus geschäumtem Polyethylen für die Einnählasche ausgestattet wird. Das hierfür entwickele Verfahren ist jedoch recht aufwendig und beinhaltet verschiedene Beschichtungs- undSchneideschritte; zusätzlich werden Trennfolien benötigt.

Die EP-A-0 430 282 offenbart eine mehrschichtige Ausweiskarte mit einem bedruckten Kern und Deckschichten, die jeweils aus zwei lagen bestehen, nämlich einer äußeren Lage aus Polycarbonat und einer darunter liegenden Lage aus einem thermoplastischem Elastomer, welches ein Polyether-Block-Amid sein kann.

Die EP-A-0 423 504 offenbart Formkörper, wie zum Beispiel Flaschen, bei denen Polycarbonat und Polyamid laminiert werden um hohe Festigkeit und chemische Widerstandsfähigkeit mit einer für Getränkeflaschen wesentlichen Sauerstoff-Barrierefunktion zu verbinden.

Es besteht daher weiterhin ein Bedarf an Folien, die die für Dokumentenkarten gewünschten positiven Eigenschaften des Polycarbonats aufweisen, gleichzeitig jedoch biegsam und knickbruchbeständig sind. Diese Folien sollen sich innerhalb des oben dargestellten Kartenherstellungsverfahrens mit anderen Polycarbonatfolien unter erhöhtem Druck und erhöhter Temperatur verpressen lassen. Aus Kostengründen sollten diese Folien auch besonders dünn sein können (Materialersparnis).

Aufgabe der Erfindung ist es daher, eine für die Herstellung von Sicherheits- oder Dokumentenkarten geeignete Polycarbonatverbundfolie bereitzustellen, die unter Erhalt ihrer gewünschten mechanischen und physikalischen Eigenschaften zusätzlich eine hohe Knickbruchbeständigkeit und ein bei Knicken oder Biegen nicht zu große Rückstellvermögen besitzt und mit Polycarbonatfolien verpressbar ist, so dass sie für die Herstellung einer Einnählasche an einer Karte verwendet werden kann.

Die Aufgabe wird gelöst durch die Verwendung einer Polycarbonat-Mehrschichtfolie in Verbindung mit wenigstens einer weiteren Folie gemäß Anspruch 1 und einer hiermit erhaltenen Karate gemäß Anspruch 11.

Vorzugsweise besitzt die verwendete Polycarbonat-Mehrschichtfolie an beiden Oberflächen je eine außen liegende Polycarbonat-Schicht, so dass die Polyamidschicht bzw. die polyamidhaltige Schicht mit ≥ 50 % PA- Einheiten eine Innenlage bildet.

Bei der verwendeten Folie handelt es sich grundsätzlich um eine Polycarbonatfolie mit einer Innenschicht oder einer unterliegenden Schicht aus Polyamid oder einem von Polyamid dominierten Polymersystem, charakterisiert durch einen Polyamidanteil (auch innerhalb eines Blockpolymers) von ≥ 50 Gew.-%. Aufgrund ihrer Festigkeit, ihrer Zähigkeit und ihres Schmelz- bzw. Erweichungspunkts ist die Polyamidschicht geeignet im Verbund mit der auf wenigstens einer Seite aufliegenden Polycarbonat-Schicht innerhalb eines Kartenverbundes verpresst zu werden. Bei einer dreischichtigen Ausführungsform (PC/PA/PC) ergibt sich unabhängig von der Lage der Schicht innerhalb des Kartenverbundes immer eine feste Anbindung der einzelnen Lagen untereinander, bei einer zweischichtigen Folie (PC/PA) kann diese an einer Außenseite der Karte verwendet werden oder es können zwei Folien so gegeneinander gelegt werden, dass sich die Schichtfolge PC/PA-PA/PC ergibt. Zwischen den Polyamidschichten könnten dann weitere in den Kartenverbund zu integrierende Elemente eingelegt werden.

Unter Polycarbonatfolien werden reine PC-Folien oder Folien aus PC-Blends mit überwiegendem PC-Anteil verstanden, soweit sie ihre charakteristischen Eigenschaften durch das Polycarbonat erhalten.

Der Schmelzpunkt oder Erweichungspunkt der Polyamid-Schicht oder der polyamidhaltigen Schicht liegt erfindungsgemäß über 120 °C, bevorzugt um oder über 150 °C, weiter bevorzugt um oder über 185 °C.

Im Laufe der Untersuchungen zu dieser Erfindung hat sich herausgestellt, dass gerade die Verbindung von Polycarbonat und Polyamid eine optimale Eigenschaftskombination für Folien bis hin zu sehr dünnen Schichtdicken herbeiführt. Die bei der Erfindung verwendete Polycarbonat-Mehrschichtfolie ist flexibel und sehr knickbruchbeständig, aber auch zug- und reißfest und minimal längendehnbar. Gleichzeitig ist die Folie an der Oberfläche hart und kratzfest. Sie kann hochglänzend transparent oder weiß sowie laserbeschreibbar ausgebildet werden.

Die Polycarbonat-Außenschichten der erfindungsgemäßen Mehrschichtfolie sind vorzugsweise nicht dicker als 50 µm, bei einer Gesamtdicke des Mehrschicht-Verbundes von vorzugsweise nicht über 400 µm. Als Zwei- oder Dreischichtfolien ausgebildet sind die Polycarbonat-Mehrschichtfolien in einer bevorzugten Ausführungsform zwischen 50 und 300 µm, weiter vorzugsweise zwischen 50 und 250 µm dick, besonders bevorzugt zwischen 50 und 150 µm dick.

In bevorzugter Ausführungsform ist die Polyamidschicht mit der wenigstens einen aufliegenden Polycarbonatschicht durch Kaschieren oder Coextrudieren verbunden. Hierfür kann ein handelsüblicher Kaschierkleber verwendet werden. Vorzugsweise handelt es sich um ein durch chemische Reaktion vernetzendes System, z.B. auf der Basis von Polyurethan, Epoxiden oder einem Mischsystem aus beiden.

Derzeit wird besonders bevorzugt, wenn die Polyamidschicht aus PA6, PA6,6, PA11 aus einer Polyamid-Legierung oder aus einem Polyamid-Copolymer besteht oder diese Materialien enthält. Der Gewichtsanteil der Polyamid-Einheiten in dem Polymer soll dabei ≥ 50 Gew.-% betragen. Vorzugsweise wird der Polyamidfilm für die Polyamidschicht so hergestellt, dass dieser eine möglichst hohe Reißdehnung zeigt.

An der Mehrschichtfolie können außerdem Merkmale vorhanden sein, wie sie für Folien zur Herstellung von Dokumenten- oder Sicherheitskarten allgemein bekannt sind. So kann wenigstens eine Schicht der Mehrschichtfolie bedruckt sein. Der Druck kann aus schwarzer oder farbiger Druckfarbe oder aus Lumineszenzfarbe bestehen. Er kann aus Sicherheitsgründen innerhalb der Mehrschichtfolie zwischen den Einzelschichten angeordnet sein.

Weiterhin kann die Folie in oder auf wenigstens einer Schicht ein Sicherheitsmerkmal und/oder einen Chip (z.B. Transponder) und/oder ein Foto tragen.

Die Polycarbonat-Mehrschichtfolie wird nicht mehr als fünf Schichten enthalten, wobei höchstens zwei Polycarbonatschichten vorhanden sind, die erfindungsgemäß in direktem Kontakt zu einer Polyamidschicht stehen. Ein weiterer möglicher Folienaufbau ist daher PC/PA/Kernschicht/PA/PC, wobei die Kernschicht eine beliebige Trägerschicht ist. Kaschierklebstoff und Druckfarbe werden hierbei nicht als eigene Schichten mit eingerechnet.

Bei dem üblichen Herstellungsverfahren für eine Polycarbonat-Karte werden Abschnitte der für den jeweiligen Zweck gewünschten Folien , einschließlich der Polycarbonat-Mehrschichtfolie, die die Einnählasche bildet, unter erhöhtem Druck und erhöhter Temperatur zu einem kartenförmigen Folienverbund verpresst. Dabei werden die Abschnitte so gewählt, dass die Mehrschichtfolie entlang einer Kartenseite einen Überstand bildet, vorstehend als Einnählasche bezeichnet, mit dessen Hilfe die Polycarbonat-Karte beispielsweise in ein Dokumentenbuch eingenäht und damit eingebunden werden kann.

Die Position der Mehrschichtfolie innerhalb des Verbundes kann dabei so sein, dass eine oder mehrere der PC-Mehrschichtfolien zwischen weiteren Schichten innerhalb einer Karte angeordnet sind, d.h. beispielsweise eine Mehrschichtfolie in der Mitte des Verbundes oder zwei Mehrschichtfolien um eine Kernschicht herum zwischen weiteren Schichten.

Die Position kann auch so sein, dass wenigstens eine Mehrschichtfolie als äußerste Schicht einer Karte angeordnet ist.

Wiederum kann auch innerhalb der Karte wenigstens eine Schicht bedruckt sein, wobei dies nicht die Polycarbonatmehrschichtfolie sein muss, und es kann in oder auf wenigstens einer Schicht der Karte ein Sicherheitsmerkmal und/oder ein Chip und/oder ein Foto angebracht sein.

Der Aufbau der Mehrschichtfolie und einer damit erhältlichen Karte mit Einnählasche wird im Folgenden anhand von Zeichnungen näher erläutert. In der Zeichnung zeigen:
- Abb. 1: schematische Darstellung einer bei der Erfindung verwendbaren Polycarbonat-Mehrschichtfolie (hier drei Schichten) im Querschnitt;
- Abb. 2: schematische Querschnittsdarstellung einer Abbildung 1 entsprechenden Folie mit zusätzlichem Sicherheitsdruck zwischen den Einzelschichten;
- Abb. 3: schematische Querschnittsdarstellung einer Karte mit Einnählasche an einer Kernschicht;
- Abb. 4: schematische Querschnittsdarstellung einer Karte mit Einnählasche unterhalb der Kernschicht:
- Abb. 5: schematische Querschnittsdarstellung einer Karte mit zwei von den äußeren Deckschichten ausgehenden, zusammengeführten Einnählaschen;
- Abb. 6: schematische Querschnittsdarstellung einer Karte mit zwei zusammengeführten Einnählaschen an um die Kernschicht angeordneten Zwischenschichten;
- Abb. 7: schematische Querschnittsdarstellung einer Karte wie in Abb. 6 mit zusätzlichen Zwischenschichten.

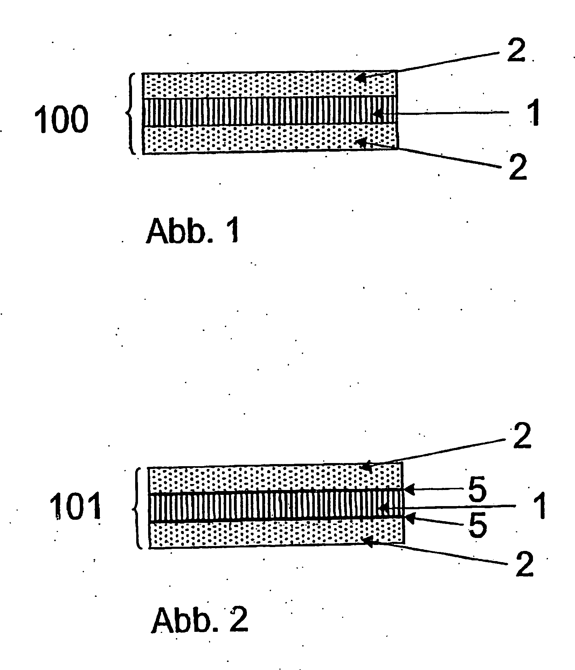

Abbildung 1 zeigt eine im Ganzen mit 100 bezeichnete Polycarbonat-Mehrschichtfolie mit einer flexiblen Innenschicht 1 aus Polyamid, die falls gewünscht auch in weiß ausgeführt sein kann. Auf die Polyamidschicht 1 ist beidseitig je eine Polycarbonat-Deckschicht 2 aufkaschiert. Hierbei kann es sich um eine funktionalisierte Schicht handeln, die weiß, transparent oder matt und insbesondere laserbescheibbar sein kann (Darstellung der Schichtdicken nicht maßstabsgetreu).

Abbildung 2 zeigt eine ähnliche Schicht 101, die grundsätzlich wie die in Abbildung 1 gezeigte Schicht aufgebaut ist und zusätzlich unterhalb der Polycarbonat-Schichten einen Sicherheitsdruck 5 trägt. Um diesen Sicherheitsdruck erkennbar zu machen, wird die PC-Schicht transparent oder zumindest translucent ausgebildet sein.

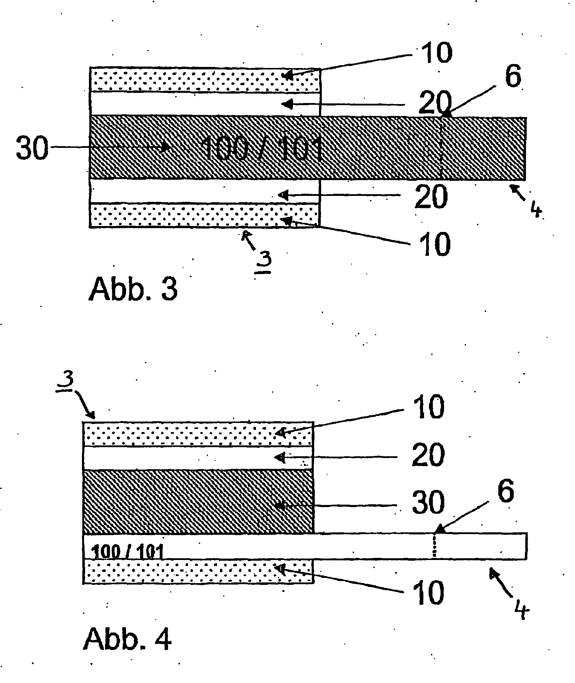

Abbildungen 3 bis 7 zeigen Kartenbeispiele, bei denen die PC-Mehrschichtfolien 100 und 101 verwendet wurden, um an den Karten Einnählaschen auszubilden. Gleiche Bezugszeichen bezeichnen sich entsprechende Schichten und Teile. (Die Darstellungen sind nicht maßstabsgetreu).

Abbildung 3 zeigt eine schematische Querschnittsdarstellung einer ersten Karte 3 mit einer Einnählasche 4. In der Schichtfolge von außen nach innen umfasst die Karte 3: transparente, laserbeschreibbare PC-Deckschichten 10, jeweils darunter je eine weitere PC-Funktionsschicht 20, z.B. weiße Schichten, sowie eine Kernschicht mit Überstand aus einer der in Abb. 1 oder 2 gezeigten Mehrschichtfolien, die eine Einnählasche 4 bildet. Die Einnählasche 4 ist an Position 6 mit einer Naht z.B. in ein Dokumentenbuch einnähbar.

Abbildung 4 zeigt ein anderes Kartenbeispiel, bei dem transparente und laserbeschreibbare Deckschichten 10 sowie eine weitere PC-Funktionsschicht 20, z.B. eine weiße Schicht, um eine Kernschicht 30 angeordnet sind. In der Abbildung unterhalb der Kernschicht 30 ist die zweite PC-Funktionsschicht ersetzt durch die Mehrschichtfolie 100 oder 101, die über die Karte übersteht und so an der Karte 3 die Einnählasche 4 bildet. Eine Anordnung der Einnählasche oberhalb der Kernschicht ist ebenfalls denkbar.

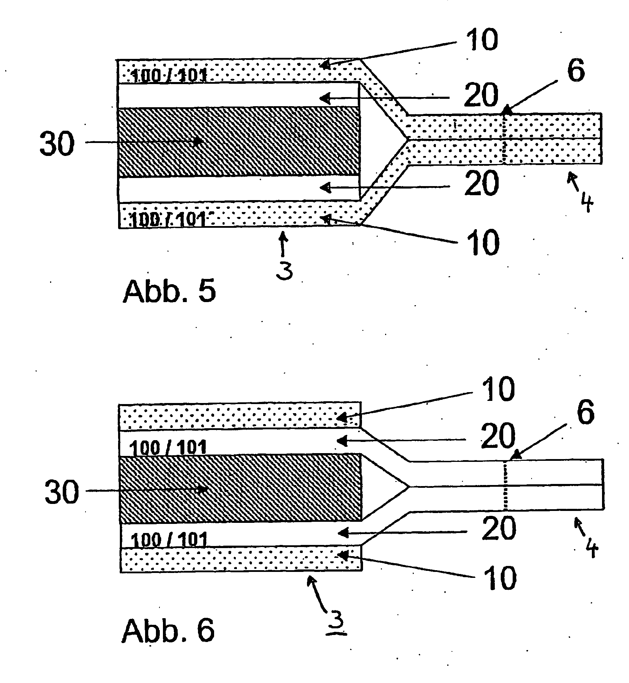

In Abbildung 5 wird die erfindungsgemäße Mehrschichtfolie 100 oder 101 für die Deckschichten 10 der Karte verwendet Beide Deckschichten ragen über den Kartenrand hinaus und werden zu einer gemeinsam vernähten Einnählasche 4 zusammengeführt.

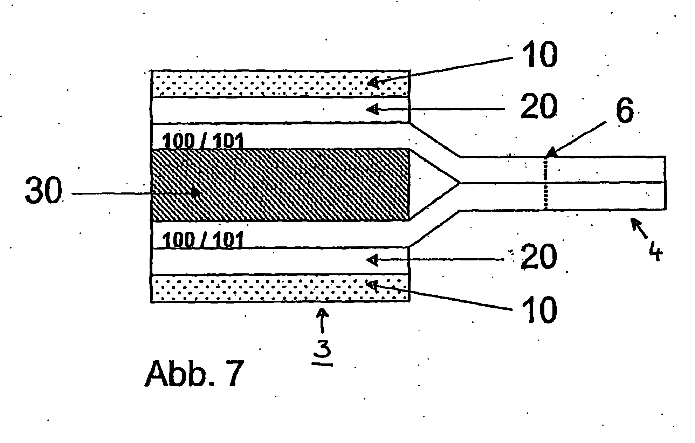

Abbildungen 6und 7 zeigen weitere Ausführungsbeispiele für Karten, bei denen die Mehrschichtfolie 100 oder 101 beidseitig im Kontakt zur Kernschicht eingesetzt wird, so dass sich eine sehr fest verankerte, von Zwischenschichten der Karte 3 ausgehende Einnählasche 4 ergibt.

### VERARBEITUNGSBEISPIELE

### Beispiel 1:

Ein ungereckter Polyamid Flachfilm der Dicke 50 µm aus PA6 wurde zweimal gegen je 30 µm dicke Polycarbonatfolien kaschiert, so dass sich folgender Verbund ergab:
PC/KK/PA/KK/PC (KK = Kaschierkleber)

Als Klebstoff wurde ein handelsüblicher lösemittelhaltiger 2-Komponenten (2K) Polyurethan-Kaschierklebstoff mit einer Schichtdicke von 4 g/m² verwendet. Die Gesamtdicke des fertigen Verbundes betrug anschließend 118 µm.

### Beispiel 2:

Ein ungereckter Polyamid Flachfilm der Dicke 70 µm aus PA6 wurde zweimal gegen je 30 µm dicke Polycarbonatfolien kaschiert, so dass sich folgender Verbund ergab:
PC/KK/PA/KK/PC (KK = Kaschierkleber)

Als Klebstoff wurde ein handelsüblicher lösemittelhaltiger 2K-Polyurethan-Kaschierklebstoff mit einer Schichtdicke von 4 g/m² verwendet. Die Gesamtdicke des fertigen Verbundes betrug anschließend 138 µm.

### Vergleichsbeispiel 1:

Als Vergleichsbeispiel 1 wurde eine transparente Polycarbonat-Flachfolie der Dicke 125 µm verwendet.

### Vergleichsbeispiel 2:

Als Vergleichsbeispiel 2 wurde eine transparente Folie aus einem Blend aus Polycarbonat mit Polybutylenterephthalat (PBT) der Dicke 125 µm verwendet.

### Versuche zum Knickbruchverhalten

Für Testzwecke wurden Folienstücke auf einer geraden Linie über 65 mm Breite mit einer Nadel perforiert, wobei der Lochabstand jeweils 2 mm betrug (Lochdurchmesser 0,5 mm). Anschließend wurde entlang der perforierten Linie solange gefalzt bis Versagen eintrat (Falzwinkel 180°), maximal 300 mal.

| | Material | Dicke [µm] | Falzzyklen bis zum Versagensbeginn | Falzzyklen bis zum vollständigen Abriss |
|---|---|---|---|---|
| Beispiel 1 | PC/PA/PC | 118 | > 300 | > 300 |
| Beispiel 2 | PC/PA/PC | 138 | > 300 | > 300 |
| Vergleichsbeispiel 1 | PC | 125 | 11 | 31 |
| Vergleichsbeispiel 2 | PC + PBT | 125 | 43 | 149 |

## Patentansprüche

1. Verwendung einer Polycarbonat-Mehrschichtfolie (100) in Verbindung mit wenigstens einer weiteren Folie (10; 20; 30), insbesondere aus Polycarbonat für eine polycarbonathaltige Karte (3) mit erhöhter Knickbruchbeständigkeit, die einen als Einnählasche (4) verwendbaren Überstand über den Rand der Karte hinaus besitzt, der von der Polycarbonat-Mehrschichtfolie (100) gebildet wird,
wobei die Polycarbonat-Mehrschichtfolie (100), die die Einnählasche (4) bildet, wenigstens eine außen liegende Schicht (2) aus Polycarbonat oder einem Polycarbonat-Blend und wenigstens eine darunter liegende Schicht aus einem anderen Polymer-Material aufweist und **dadurch gekennzeichnet ist,**
**dass** die Schichtdicke der außen liegenden Polycarbonatschicht(en) (2) ≤ 50 µm beträgt und
**dass** die unter der äußeren Polycarbonatschicht angeordnete Schicht (1) aus Polyamid besteht oder einen Polyamidgehalt ≥ 50 Gew.% enthält, einen Schmelzpunkt > 120°C aufweist und eine Schichtdicke größergleich der Schichtdicke der außen liegenden Polycarbonatschicht (2) besitzt.

2. Verwendung nach Anspruch 1, **dadurch gekennzeichnet, dass** die Polycarbonat-Mehrschichtfolie (100) an beiden Oberflächen je eine außen liegende Polycarbonat-Schicht (2) besitzt.

3. Verwendung nach Anspruch 2, **dadurch gekennzeichnet, dass** die Polycarbonat-Mehrschichtfolie (100) aus drei Schichten besteht und die Schichtfolge: Polycarbonat-Schicht(2)/Polyamid- oder polyamidhaltige Schicht(1)/Polycarbonat-Schicht(2) aufweist.

4. Verwendung nach einem der Ansprüche 1 bis 3, **dadurch gekennzeichnet, dass** die Polyamidschicht (1) mit der wenigstens einen aufliegenden Polycarbonatschicht (2) durch Kaschieren oder Coextrudieren verbunden ist.

5. Verwendung nach einem der Ansprüche 1 bis 4, **dadurch gekennzeichnet, dass** die Polyamidschicht (1) aus PA6, aus PA6,6, PA11, einer Polyamid-Legierung oder aus einem Polyamid-Copolymer besteht oder diese Materialien enthält.

6. Verwendung nach einem der Ansprüche 1 bis 5, **dadurch gekennzeichnet dass** wenigstens eine Schicht der Mehrschichtfolie bedruckt ist.

7. Verwendung nach einem der Ansprüche 1 bis 6, **dadurch gekennzeichnet, dass** in oder auf wenigstens einer Schicht der Mehrschichtfolie ein Sicherheitsmerkmal und/oder ein Chip und/oder ein Foto angebracht ist.

8. Verwendung nach einem der Ansprüche 1 bis 7, **dadurch gekennzeichnet, dass** wenigstens eine Polycarbonat-Mehrschichtfolie (100) zwischen weiteren Schichten (10;20;30) innerhalb einer Karte (3) angeordnet ist.

9. Verwendung nach einem der Ansprüche 1 bis 7, **dadurch gekennzeichnet, dass** wenigstens eine Polycarbonat-Mehrschichtfolie (100) als äußerste Schicht eine Karte (3) angeordnet ist.

10. Verwendung nach Anspruch 8 oder 9, **dadurch gekennzeichnet, dass** die Schichten (10; 20; 30; 100) oder Folien innerhalb der Karte (3) durch Pressen unter erhöhtem Druck und erhöhter Temperatur verbunden werden.

11. Polycarbonathaltige Karte (3) mit erhöhter Knickbruchbeständigkeit, die aus wenigstens einer Polycarbonat-Mehrschichtfolie (100) in Verbindung mit wenigstens einer weiteren Folie (10; 20; 30), insbesondere aus Polycarbonat, besteht, **gekennzeichnet durch** einen als Einnählasche (4) verwendbaren, aus der oder den Polycarbonat-Mehrschichtfolien gebildeten Überstand über den Rand der Karte (3) hinaus,
wobei die Polycarbonat-Mehrschichtfolie (100), die die Einnählasche (4) bildet, wenigstens eine außen liegende Schicht (2) aus Polycarbonat oder einem Polycarbonat-Blend und wenigstens eine darunter liegende Schicht aus einem anderen Polymer-Material aufweist und **dadurch gekennzeichnet ist**, dass die Schichtdicke der außen liegenden Polycarbonatschicht(en) (2) ≤ 50 µm beträgt und
dass die unter der äußeren Polycarbonatschicht angeordnete Schicht (1) aus Polyamid besteht oder einen Polyamidgehalt ≥ 50 Gew.% enthält, einen Schmelzpunkt > 120°C aufweist und eine Schichtdicke größergleich der Schichtdicke der außen liegenden Polycarbonatschicht (2) besitzt.

## Claims

1. Use of a multilayer polycarbonate foil (100) in conjunction with at least one further foil (10; 20; 30), in particular made of polycarbonate, for a polycarbonate-containing card (3) with increased residence to buckling fracture, which has a section that projects beyond the margin of the card and that can be used as stitch-in lug (4), and that is formed by the multilayer polycarbonate foil (100),
where the multilayer polycarbonate foil (100) which forms the stitch-in lug (4) has at least one external layer (2) made of polycarbonate or of a polycarbonate blend, and has at least one layer located thereunder made of another polymer material, and is **characterized in that**
the thickness of the external polycarbonate layer(s) (2) is ≤ 50 µm and
**in that** the layer (1) arranged under the exterior polycarbonate layer is composed of polyamide or comprises ≥ 50% by weight of polyamide, has a melting point > 120°C, and has a thickness greater than or equal to the thickness of the external polycarbonate layer (2).

2. Use according to Claim 1, **characterized in that** each of the two surfaces of the multilayer polycarbonate foil (100) has an external polycarbonate layer (2).

3. Use according to Claim 2, **characterized in that** the multilayer polycarbonate foil (100) is composed of three layers and has the following layer sequence: polycarbonate layer (2)/polyamide or polyamide-containing layer (1)/polycarbonate layer (2).

4. Use according to any of Claims 1 to 3, **characterized in that** the polyamide layer (1) has been bonded by lamination or coextrusion to the at least one superposed polycarbonate layer (2).

5. Use according to any of Claims 1 to 4, **characterized in that** the polyamide layer (1) is composed of PA6, of PA6,6 or PA11, of a polyamide alloy or of a polyamide copolymer, or comprises the said materials.

6. Use according to any of Claims 1 to 5, **characterized in that** at least one layer of the multilayer foil has been printed.

7. Use according to any of Claims 1 to 6, **characterized in that** a security feature and/or a chip and/or a photograph has been attached in or on at least one layer of the multilayer foil.

8. Use according to any of Claims 1 to 7, **characterized in that** at least one multilayer polycarbonate foil (100) has been arranged between further layers (10; 20; 30) within a card (3).

9. Use according to any of Claims 1 to 7, **characterized in that** at least one multilayer polycarbonate foil (100) has been arranged as outermost layer of a card (3).

10. Use according to Claim 8 or 9, **characterized in that** the layers (10; 20; 30; 100) or foils within the card (3) are bonded via pressing, using increased pressure and increased temperature.

11. Polycarbonate-containing card (3) with increased resistance to buckling fracture, which is composed of at least one multilayer polycarbonate foil (100) in conjunction with at least one further foil (10; 20; 30), in particular made of polycarbonate, **characterized by** a section which projects beyond the margin of the card (3) and which has been formed from the multilayer polycarbonate foil(s) and which can be used as stitch-in lug (4),
where the multilayer polycarbonate foil (100) which forms the stitch-in lug (4) has at least one external layer (2) made of polycarbonate or of a polycarbonate blend, and has at least one layer located thereunder made of another polymer material, and is **characterized in that** the thickness of the external polycarbonate layer(s) (2) is ≤ 50 µm, and
**in that** the layer (1) arranged under the exterior polycarbonate layer is composed of polyamide or comprises ≥ 50% by weight of polyamide, has a melting point > 120°C, and has a thickness greater than or equal to the thickness of the external polycarbonate layer (2).

## Revendications

1. Utilisation d'une feuille à plusieurs couches de polycarbonate (100) en association avec au moins une autre feuille (10 ; 20 ; 30), en particulier en polycarbonate, pour une carte (3) contenant du polycarbonate présentant une résistance élevée au flambage qui présente une partie qui dépasse du bord de la carte, utilisable comme patte de couture (4), qui est formée par la feuille à plusieurs couches de polycarbonate (100),
la feuille à plusieurs couches de polycarbonate (100), qui forme la patte de couture (4), présentant au moins une couche externe (2) en polycarbonate ou un mélange de polycarbonates et au moins une couche sous-jacente à celle-ci en un autre matériau polymère et **caractérisée en ce que** l'épaisseur de couche de la (des) couche(s) de polycarbonate extérieure(s) (2) est ≤ 50 µm et
**en ce que** la couche (1) disposée sous la couche de polycarbonate extérieure est en polyamide ou contient une teneur en polyamide ≥ 50% en poids, présente un point de fusion > 120°C et une épaisseur de couche du même ordre de grandeur que l'épaisseur de couche de la couche de polycarbonate (2) extérieure.

2. Utilisation selon la revendication 1, **caractérisée en ce que** la feuille à plusieurs couches de polycarbonate (100) présente sur les deux faces à chaque fois une couche de polycarbonate extérieure (2).

3. Utilisation selon la revendication 2, **caractérisée en ce que** la feuille à plusieurs couches de polycarbonate (100) est constituée par trois couches et présente l'ordre de couches : couche de polycarbonate(2)/couche de polyamide ou contenant du polyamide(1)/couche de polycarbonate(2).

4. Utilisation selon l'une quelconque des revendications 1 à 3, **caractérisée en ce que** la couche de polyamide (1) est assemblée par contrecollage ou coextrusion avec au moins une couche de polycarbonate (2) reposant sur celle-ci.

5. Utilisation selon l'une quelconque des revendications 1 à 4, **caractérisée en ce que** la couche de polyamide (1) est constituée du PA6, du PA6,6, du PA11, un mélange de polyamides ou un copolymère de polyamide ou contient ces matériaux.

6. Utilisation selon l'une quelconque des revendications 1 à 5, **caractérisée en ce qu'**au moins une couche de la feuille à plusieurs couches est imprimée.

7. Utilisation selon l'une quelconque des revendications 1 à 6, **caractérisée en ce qu'**une caractéristique de sécurité et/ou une puce et/ou une photo est agencée dans ou sur au moins une couche de la feuille à plusieurs couches.

8. Utilisation selon l'une quelconque des revendications 1 à 7, **caractérisée en ce qu'**au moins une feuille à plusieurs couches de polycarbonate (100) est agencée comme couche la plus extérieure d'une carte (3).

9. Utilisation selon l'une quelconque des revendications 1 à 7, **caractérisée en ce qu'**au moins une feuille à plusieurs couches de polycarbonate (100) est agencée comme couche la plus extérieure d'une carte (3).

10. Utilisation selon la revendication 8 ou 9, **caractérisée en ce que** les couches (10 ; 20 ; 30 ; 100) ou feuilles dans la carte (3) peuvent être assemblées par compression sous pression élevée et température élevée.

11. Carte (3) contenant du polycarbonate présentant une résistance élevée au flambage, qui est constituée par au moins une feuille à plusieurs couches de polycarbonate (100) en association avec au moins une autre feuille (10 ; 20 ; 30), en particulier en polycarbonate, **caractérisée par** une partie qui dépasse du bord de la carte, utilisable comme patte de couture (4), formée par la ou les feuilles à plusieurs couches de polycarbonate (3),
la feuille à plusieurs couches de polycarbonate (100), qui forme la patte de couture (4), présentant au moins une couche externe (2) en polycarbonate ou un mélange de polycarbonates et au moins une couche sous-jacente à celle-ci en un autre matériau polymère et **caractérisée en ce que** l'épaisseur de couche de la (des) couche(s) de polycarbonate extérieure(s) (2) est ≤ 50 µm et
**en ce que** la couche (1) disposée sous la couche de polycarbonate extérieure est en polyamide ou contient une teneur en polyamide ≥ 50% en poids, présente un point de fusion ≥ 120°C et une épaisseur de couche du même ordre de grandeur que l'épaisseur de couche de la couche de polycarbonate (2) extérieure.
